# NEUE EUROPÄISCHE PATENTSCHRIFT

(11) **EP 2 504 596 B2**
(45) Veröffentlichungstag und Bekanntmachung des Hinweises auf die Entscheidung über den Einspruch: **29.06.2022**
(45) Hinweis auf die Patenterteilung: 27.08.2014
(21) Anmeldenummer: 10800879.8
(22) Anmeldetag: 18.11.2010
(51) Int. Cl.: F16D 21/06, F16D 25/10, F16D 25/12

(54) **MEHRFACHKUPPLUNGSVORRICHTUNG, BAUTEIL, BAUGRUPPEN UND VERFAHREN ZUR MONTAGE**
MULTIPLE CLUTCH DEVICE, COMPONENT, ASSEMBLIES, AND METHOD FOR ASSEMBLY
DISPOSITIF D'EMBRAYAGE MULTIPLE, COMPOSANT, ENSEMBLES ET PROCÉDÉ DE MONTAGE

(30) Priorität: 25.11.2009 DE 102009054445
(43) Veröffentlichungstag der Anmeldung: 03.10.2012
(73) Patentinhaber: Schaeffler Technologies AG & Co. KG, 91074 Herzogenaurach (DE)
(72) Erfinder: DINGER, Christian, 77886 Lauf (DE); DEGLER, Mario, 76534 Baden-Baden (DE); ARNOLD, Johannes, 77855 Achern (DE); HOFSTETTER, Dirk, 76448 Durmersheim (DE)
(86) Internationale Anmeldenummer: PCT/DE2010/001356
(87) Internationale Veröffentlichungsnummer: WO 2011/063788

(56) Entgegenhaltungen:
- EP-A1- 2 387 674
- EP-A2- 1 744 074
- DE-A1-102009 012 283
- JP-A- 2006 234 060

## Beschreibung

Die vorliegende Erfindung betrifft eine Mehrfachkupplungsvorrichtung für einen Antriebsstrang mit einer Antriebseinheit und einem nachfolgend angeordneten Getriebe, die mit einer Antriebswelle der Antriebseinheit verbunden und in einer nicht mit der Antriebswelle der Antriebseinheit mitrotierenden Kupplungsglocke aufgenommen ist, mit zwei Lamellenkupplungen, die jeweils einen eingangsseitigen und ausgangsseitigen Lamellenträger und sich in axialer Richtung abwechselnde Lamellen aufweisen und mit einer Betätigungseinrichtung. Weiterhin betrifft die Erfindung ein Bauteil einer Kupplung, zwei Baugruppen einer Kupplung und ein Verfahren zur Montage der zwei Baugruppen.

Aus der DE 10 2006 049 731 ist eine Doppelkupplungsvorrichtung bekannt. Bei dieser Doppelkupplung muss eine von der Betätigungseinrichtung erzeugte Betätigungskraft über den eingangsseitigen Lamellenträger, ein Stützlager und einen an der Kupplungsglocke fest angebundenen Kupplungsdeckel abgestützt werden. Hierfür sind der eingangsseitige Lamellenträger, das Stützlager und der Kupplungsdeckel entsprechend stark zu dimensionieren, wobei die jeweilige Betätigungskraft von dem zu übertragenden Drehmoment abhängt. Bei steigendem Drehmoment ist dementsprechend eine entsprechend höhere Betätigungskraft und eine entsprechend stärke Dimensionierung, insbesondere des Kupplungsdeckels, notwendig.

Aus der DE10 2009 012 283 ist eine Doppelkupplungsvorrichtung bekannt. Bei dieser sind zwei Lamellenkupplungen vorgesehen, die jeweils einen eingangsseitigen und einen ausgangsseitigen Lamellenträger und sich in axialer Richtung abwechselnde Lamellen, sowie Betätigungseinrichtungen jeweils für die Lamellenkupplungen aufweisen.

Derzeit wird aus Energieeffizienzgründen versucht, eine Gesamtzahl an Zylindern von Brennungsmotoren zu reduzieren, insbesondere sind 2- bzw. 3-Zylindermotoren in Entwicklung. Mit einer verringerten Anzahl an Zylinder steigt aber eine Laufunruhe der Antriebseinheiten an. Mit steigender Laufunruhe der Antriebseinheiten müssen auch die Drehschwingungsdämpfer, wie beispielsweise Zweimassenschwungräder, neu dimensioniert werden, wodurch der axiale Bauraumbedarf der Doppelkupplung steigt.

Die Aufgabe der Erfindung besteht darin, eine verbesserte Mehrfachkupplungsvorrichtung, ein verbessertes Bauteil, verbesserte Baugruppen einer Kupplung und ein vereinfachtes Verfahren zur Montage einer Drehmomentübertragungseinheit bereit zu stellen.

Die Aufgabe der Erfindung wird durch die Mehrfachkupplungsvorrichtung gemäß Anspruch 1.

Weitere vorteilhafte Ausführungsformen der Erfindung sind in den abhängigen Ansprüchen angegeben.

Ein Vorteil der erfindungsgemäßen Mehrfachkupplungsvorrichtung besteht darin, dass das Fliehkraftpendel in Wirkverbindung mit den Kupplungen steht. Dadurch wird eine gute Kopplung und eine verbesserte Schwingungsisolation erreicht. Ein Vorteil einer Weiterbildung der Mehrfachkupplung besteht darin, dass das Fliehkraftpendel zwischen dem Zweimassenschwungrad (ZMS), d.h. dem Torsionsschwingungsdämpfer und der Doppelkupplung angeordnet ist. Dadurch wird ein kleiner Bauraum ermöglicht.

Ein Vorteil des erfindungsgemäßen Bauteils besteht darin, dass die einstückige Ausbildung des Ausgangsflansches und des Zugtopfes kostengünstig herzustellen ist.

Ein Vorteil der erfindungsgemäßen Baugruppen besteht darin, dass die Drehmomentübertragungseinheit einfach zu montieren ist. Ein weiterer Vorteil der Baugruppen besteht darin, dass ein axialer und ein radialer Versatz zwischen einer Antriebswelle, d.h. der Kurbelwelle und einer Getriebewelle durch die Zweiteilung der Baugruppen, insbesondere durch das Zweimassenschwungrad ausgeglichen werden.

Das erfindungsgemäße Verfahren weist den Vorteil auf, dass der Motor und das Getriebe einfach montiert werden können.

Die vorliegende Erfindung wird nachfolgend anhand bevorzugter Ausführungsbeispiele in Verbindung mit den zugehörigen Figuren näher erläutert. In diesen zeigen:
- Fig. 1: ein Halbschnitt einer Doppelkupplung gemäß einem ersten Ausführungsbeispiel, und
- Fig. 2: einen Halbschnitt einer zweiten Ausführungsform der Doppelkupplung,

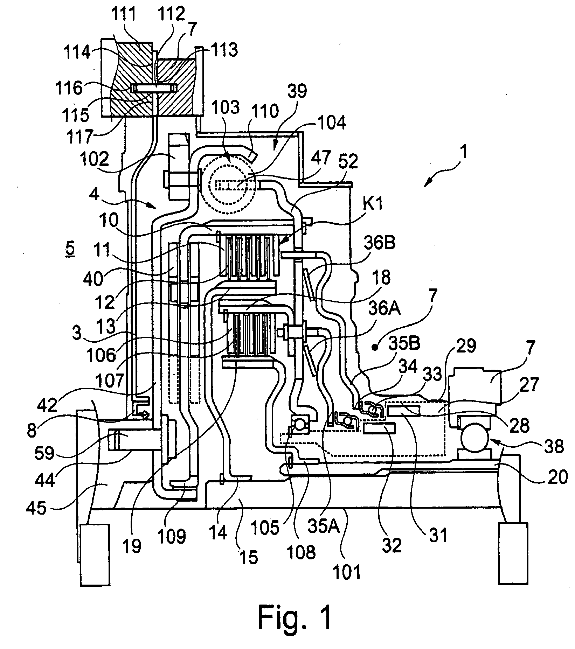

Fig. 1 zeigt eine Doppelkupplung 1 bestehend aus zwei radial geschachtelten nasslaufenden Lamellenkupplungen K1 und K2 mit einer Mittensymmetrieachse 101. Die Kupplung K1 ist dabei radial außen und Kupplung K2 ist dabei radial innen angeordnet. Die Doppelkupplung 1 steht eingangsseitig über ein der Kupplung K1 vorgeschaltetes Zweimassenschwungrad 39 mit einer Kurbelwelle 45 eines Motors in Verbindung.

Das Zweimassenschwungrad 39 und die Doppelkupplung 1 befinden sich in einer Kupplungsglocke 4, die von einem Kupplungsdeckel 3 und einem Getriebegehäuse 7 gebildet wird. Der Kupplungsdeckel 3 trennt einen Nassraum 4 im Innern der Kupplungsglocke von einem Trockenraum 5 außerhalb. Eine statische Abdichtung 6 des Kupplungsdeckels 3 hin zu dem Getriebegehäuse 7 eines im Antriebstrang nachfolgend angeordneten Getriebes (nicht im Einzelnen gezeigt) erfolgt beispielsweise über einen O-Ring 6 oder ein sonstiges statisches Dichtelement. Der Kupplungsdeckel 3 ist zur Kurbelwelle 45 hin über einen Radialwellendichtring 8 als einem dynamischen Dichtelement abgedichtet.

Das Zweimassenschwungrad 39 (ZMS) weist eine Platte 42 (drive plate) auf, die mit der Kurbelwelle 45 über eine Schraubverbindung 59 verbunden ist. Die Platte 42 ist mittensymmetrisch zur Mittensymmetrieachse 101 ausgebildet.

Das ZMS 39 umfasst primärseitig die Platte 42, welche vorliegend topfartig ausgebildet ist und in seinem radial inneren Bereich die Schraubverbindung 59 umfasst, welche in ein Gewinde 44 der Kurbelwelle 45 eingeschraubt ist und die primärseitige Platte 42 zentriert. In einem radial äußeren Bereich ist ein Starterzahnkranz 102 an der Platte 42 befestigt. In seinem radial äußeren Bereich weist die primärseitige Platte 42 an einem Eingangsflansch 110 taschenförmige Bereiche 103 auf, in denen Federelemente 104 aufgenommen sind, wobei die nicht in Kontakt zu diesen Taschen stehenden Endbereiche der Federelemente 104 mit einem sekundärseitigen ZMS-Ausgangsflansch 47 in Wirkverbindung stehen. Die Federelemente 104 stellen Dampfungselemente und einen Energiespeicher dar. Der Ausgangsflansch 47 ist mit einem Zugtopf 52 verbunden. Der Zugtopf 52 ist mit eingangsseitigen Lamellenträgern 10,18 der radial innen und außen angeordneten Kupplungen K1, K2 verbunden. Der Zugtopf 52 ist mittensymmetrisch zur Mittensymmetrieachse 101 ausgebildet. Der Zugtopf 52 ist auf einer radialen Innenseite über ein Stützlager 105 an einem Gehäuse 28 einer Betätigungseinrichtung 27 radial abgestützt.

Das Stützlager 105, welches die Betätigungskraft auf das Einrückergehäuse 28 zusammen mit dem Zugtopf 52 zurückführt, wird vorzugsweise über eine Bajonettverbindung mit dem Einrückergehäuse 28 verbunden.

Der eingangsseitige Lamellenträger 10 der radial äußeren Kupplung K1 umfasst Verzahnungsbereiche an denen eingangsseitige Lamellen des Lamellenpakets der äußeren Lamellenkupplung K1 eingehängt sind, so dass die eingangsseitigen Lamellen 11 drehfest und axial verlagerbar angeordnet sind. Die eingangsseitigen Lamellen 11 sind alternierend zu abtriebsseitigen Lamellen 12 angeordnet, wobei die eingangsseitigen Lamellen 11 und die alternierend angeordneten abtriebsseitigen Lamellen 12 gemeinsam das Lamellenpaket der Kupplung K1 bilden. Die abtriebsseitigen Lamellen 12 sind drehfest und axial verlagerbar mit einem abtriebsseitigen Lamellenträger 13 der äußeren Lamellenkupplung K1 verbunden. Der abtriebsseitige Lamellenträger 13 der Lamellenkupplung K1 umfasst eine Nabe 14, welche mit einer ersten Getriebeeingangswelle 15 eines nicht im Einzelnen gezeigten Doppelkupplungsgetriebes verbunden ist.

Eingangsseitige Lamellen 106 der radial innen angeordneten Lamellenkupplung K2 sind in einem Verzahnungsbereich des eingangsseitigen Lamellenträgers 18 drehfest und axial verlagerbar eingehängt. Die eingangsseitigen Lamellen 106 der radial innen angeordneten Kupplung K2 sind alternierend zu ausgangsseitigen Lamellen 107 angeordnet, welche an einem abtriebsseitigen Lamellenträger 19 der Lamellenkupplung K2 drehfest und axial verlagerbar angeordnet sind. Der abtriebsseitige Lamellenträger 19 weist einen Nabenbereich 108 auf, an welchem der abtriebsseitige Lamellenträger 19 mit einer zweiten Getriebeeingangswelle 20 (die als Hohlwelle ausgebildet ist) verbunden ist. Die eingangsseitigen Lamellenträger 10, 18 der zwei Kupplungen K1, K2 sind mit dem Zugtopf 52 verbunden.

Die Getriebeeingangswellen 15, 20 sind vorliegend koaxial und ineinander geschachtelt angeordnet, wobei die äußere Getriebeeingangswelle 20 über ein Stützlager 38 im Gehäuse 7 abgestützt ist, und wobei die innere Getriebeeingangswelle 15 über eine Lagerung in der äußeren Hohlwelle 20 abgestützt ist.

Die Doppelkupplung 1 umfasst weiterhin die Betätigungseinrichtung 27, die als zentraler Kupplungsausrücker für beide Lamellenkupplungen K1 und K2 ausgebildet ist, mit dem Gehäuse 28, welches über einen Lagerballus 29 am Gehäuse 7 des Getriebes abgestützt ist. Die vorliegend als Doppelringkolbeneinrücker (auch bezeichnet als Doppel CSC, wobei CSC für 'Concentric Slave Cylinder' steht) ausgebildete Betätigungseinrichtung 27 umfasst zwei kreisringförmige und konzentrisch zueinander angeordnete Kolben 31, 32. Die dargestellte Variante der Betätigungseinrichtung 27 zeigt eine Ausführungsform, in welcher die beiden kreisringförmigen Kolben 31, 32 aufeinander abgleiten. Damit stellt der Innendurchmesser des äußeren Kolbens 31 der Kupplung K1 gleichzeitig die Dichtfläche für den inneren Kolben der Kupplung K2 dar. Alternativ (allerdings nicht gezeigt) ist auch eine Ausführungsform denkbar, bei der die beiden Kolben durch einen kreisringförmigen Steg voneinander getrennt sind, auf welchem die Dichtungen gleiten können. Mit einer solchen alternativen Ausführungsform kann eine gegenseitige Beeinflussung der Kolben 31, 32 durch die Dichtung komplett ausgeschlossen werden. Die vorstehend beschriebenen möglichen Ausgestaltungen der Betätigungseinrichtung 27 sind jedoch ausschließlich als Beispiele zu verstehen. So kann anstelle eines Ringkolbens auch eine andere Querschnittsform und/oder mehrere einzelne Kolben entlang des Umfangs verteilt vorgesehen sein. Ebenso kann ein elektrischer Ausrücker vorgesehen werden anstelle der Kolben/Zylinder-Einheiten. Zudem könnten auch mechanische Betätigungseinrichtungen insbesondere hebelbetätigte Einrichtungen vorgesehen sein. Die Kolbendichtungen der Ringkolben 31, 32 sind vorliegend als Elastomerdichtungen ausgeführt, die über formschlüssige Verbindungen mit den jeweiligen Kolben verbunden sind. Als formschlüssige Verbindung ist z. B. eine konische Nut im Kolben denkbar, in welche eine entsprechende Feder der Elastomerdichtung eingeknüpft wird. Alternativ sind auch eingelegte Dichtungen aus z. B. PTFE oder an die Kolben direkt angespritzte Elastomerdichtungen denkbar. Die ringförmigen Kolben 31, 32 werden von dem Einrückgehäuse 28 aufgenommen, wobei Bohrungen im Einrückergehäuse 28, welche in den Figuren nicht im Einzelnen gezeigt sind dazu dienen, die Kolben über Drucköl zu betätigen. Zusätzlich übernimmt das Einrückergehäuse 28 die radiale Positionierung der Kolben über den Lagerballus innerhalb der Kupplungsglocke.

Das Hydraulikmedium (Betätigungsmodul) wird der Betätigungseinrichtung 27 über Fittings, die mit der Kupplungsglocke verbunden sind, zugeführt.

Jede der Betätigungseinheiten der Betätigungseinrichtung 27 ist über ein Betätigungslager 33, 34 mit einer Kraftübertragungseinrichtung verbunden, mit der die jeweilige Betätigungskraft auf die jeweilige Lamellenkupplung K1, K2 übertragen wird. Vorliegend umfasst jede der Kraftübertragungseinrichtungen einen Drucktopf 35A, 35B, welcher am jeweiligen Lager 33, 34 anliegt. Jeder Drucktopf weist eine Elastizität auf, welche zu einer gewissen Federwirkung führt. Bezüglich der vorliegenden Betätigungskräfte der Doppelkupplung können die Drucktöpfe aber als "im Wesentlichen starr" angenommen werden. Die Druckköpfe durchgreifen den Zugtopf 52 und stehen mit den eingangsseitigen Lamellenträgern der äußeren und der inneren Kupplung K1, K2 direkt in Verbindung. Die Drucktöpfe 35A, 35B sind zur direkten Betätigung der eingangsseitigen Lamellenträger 10, 18 der Kupplungen K1, K2 vorgesehen.

Zudem umfasst jede der Kraftübertragungseinrichtungen eine Feder 36A, 36B, welche mit dem jeweiligen Drucktopf 35A, 35B und dem Zugtopf 52 verbunden sind und als Rückstellfedern die Drucktöpfe 35A, 35B in eine Ausgangsposition vorspannen.

Bei Druckbeaufschlagung eines der Kolben bzw. beider Kolben 31, 32 bewegt sich dieser bzw. bewegen sich diese in Richtung Kurbelwelle 45 und betätigt dabei über die Mitnahme des zugehörigen Drucktopfes 35A, 35B gegen die Vorspannkräfte der Federn 36A, 36B die Lamellenpakete.

Das Einrückergehäuse 28 weist innerhalb der Kupplungsglocke 4 eine Drehmomentabstützung auf, damit eine Lagerreibung innerhalb des Stützlagers 30 nicht zu einer Rotation des Einrückergehäuses 28 führen kann. Als Momentabstützung können hierbei die Fittings zur Druckzuführung verwendet werden. Alternativ kann auch eine separate Abstützung per Zapfen oder ähnlichem Bauteil vorgesehen sein, welches bei der Montage der Kupplung in den Kupplungsglockenboden eingreift.

Die beschriebene Ausführung zeigt eine Kombination eines Kupplungselementes mit einem Dämpfungselement in Form eines ZMS 39. Zudem ist das Dämpfungselement spielfrei an das Antriebselement, d.h. die Kurbelwelle 45 angebunden. Weiterhin ist das Dämpfungselement, d.h. der Zugtopf 52 spielfrei an das Kupplungselement, d.h. an die eingangsseitigen Lamellenträger 10, 18 angebunden. Aufgrund der vorliegenden Ausführung werden axiale und radiale Versätze zwischen der Kurbelwelle und den Getriebeeingangswellen durch das Dämpfungselement, d.h. das ZMS 39 ausgeglichen.

In einer weiteren Ausführungsform ist zusätzlich ein Fliehkraftpendel 40 in der Kupplungsglocke 4 angeordnet. Der Kupplungsdeckel 3 ist vorliegend nicht zur Axiallagerung der Kupplung vorgesehen. Vielmehr stellt er ausschließlich die Trennung zwischen Nassraum 4 und Trockenraum 5 über die Dichtungseinrichtungen dar. Der eingangsseitige Lamellenträger 10 der radial äußeren Kupplung K1 ist über einen Verbindungsflansch, an dem das Fliehkraftpendel 40 angeordnet ist, an der Kurbelwelle 45 über ein Gleitlager 109 drehbar abgestützt. Dabei ist das Fliehkraftpendel 40 zwischen der kurbelwellenseitigen Abstützstelle 109 und dem Lamellenpaket der radial äußeren Kupplung K1 angeordnet ist. Dabei ist ein radial inneres Ende des Pendelflansches über die Gleitlagerung 109 an der Kurbelwelle 45 direkt oder an einer hülsenförmigen Auflagefläche der Platte 42 abgestützt. Dadurch ist das Fliehkraftpendel 40, insbesondere der Pendelflansch, zentriert. Durch die beschrieben Anordnung ergeben sich Bauraumvorteile und für das Fliehkraftpendel steht mehr Raum für die Bewegungsbahn zur Verfügung. Die Abstützung des eingangsseitigen Lamellenträgers 10 der äußeren Kupplung K1 auf der Kurbelwelle 45 kann auch ohne Fliehkraftpendel 40 ausgeführt sein. Abhängig von der gewählten Ausführungsform kann das Fliehkraftpendel auch direkt am eingangsseitigen Lamellenträger der äußeren oder der inneren Kupplung K1,K2 befestigt sein. Weiterhin kann das Fliehkraftpendel 40 auch an anderer Stelle an einem Bauteil zur Krafteinleitung in die äußere oder innere Kupplung angeschlossen sein.

Das Fliehkraftpendel 40 ist im Kraftfluss von Motor zum Getriebe zwischen dem ZMS 39, d. h. dem Torsionsschwingungsdämpfer und der Doppelkupplung K1, K2 angeordnet. Weiterhin sind die radial innere und die radial äußere Kupplung K2, K1 mit dem Fliehkraftpendel 40 verbunden. In einer ersten Ausführungsform ist das Fliehpraftpendel über einen Pendelflansch an die Doppelkupplung angebunden. In einer weiteren Ausführungsform hängt das Fliehkraftpendel direkt an einem Bauteil zur Krafteinleitung an der Doppelkupplung.

Aufgrund der vorliegenden Ausführung kann der Ausgangsflansch 47 des ZMS 39 mit dem Zugtopf 52 einstückig ausgebildet und beispielsweise über ein Tiefziehverfahren oder andere spanlose Umformverfahren gefertigt werden.

In der vorliegenden Ausführung liegt eine Trennfläche der Unterbaugruppen der Drehmomentübertragungseinheit zwischen dem ZMS-Eingangsflansch 110 und dem ZMS-Ausgangsflansch 47. Zur Montage werden der Kupplungsdeckel 3, die Platte 42 und der ZMS-Eingangsflansch 110 mit der Kurbelwelle 45 verbunden. Der ZMS-Ausgangsflansch 47, die Doppelnasskupplung K1, K2 mit dem Fliehkraftpendel 40 und der Betätigungseinrichtung 27 werden als Unterbaugruppe 2 getriebeseitig angebunden. Bei der Montage werden die antreibseitig montierte Unterbaugruppe 1 und die getriebeseitig montierte Unterbaugruppe 2 im Getriebewerk montiert, d.h. verheiratet. An dieser Trennstelle ist die Drehmomentübertragungseinheit auch wieder demontierbar.

Der Kupplungsdeckel 3 wird vorzugsweise zwischen dem Motorgehäuse 111 und der Getriebeglocke 7 festgeklemmt. Dabei werden vorzugsweise Positionierstifte 112 verwendet, die in einer Anlagefläche 113 des Getriebegehäuses 7 eingebracht sind und aus der Anlagefläche 113 herausragen. Der Kupplungsdeckel 3 weist Öffnungen 115 auf, die gemäß der Anordnung der Positionierstifte 112 angeordnet sind. Der Kupplungsdeckel 3 wird bei der Montage auf die Anlagefläche 113 des Getriebegehäuses 7 aufgelegt, wobei die Positionierstifte 112 durch die Öffnungen 115 ragen. Dann wird eine Anlagefläche 114 des Motorgehäuses 111 an die Anlagefläche 113 des Getriebegehäuses 7 angelegt, wobei die Positionierstifte in weitere Öffnungen 116 des Motorgehäuses 111 eingreifen. Anschließend wird das Motorgehäuse 111 mit dem Getriebegehäuse 7 verschraubt, wobei der Kupplungsdeckel 3 in Form eines Dichtbleches radial und axial zwischen dem Motorgehäuse 111 und dem Getriebegehäuse 7 fixiert und festgeklemmt wird. Der Kupplungsdeckel 3 überdeckt mit einem radial äußeren ringförmigen Randbereich 117 die Anlageflächen 113, 114 des Getriebegehäuses 7 und des Motorgehäuses 11. Damit wird eine Flächendichtung der Kupplungsglocke mit einfachen Mitteln erreicht.

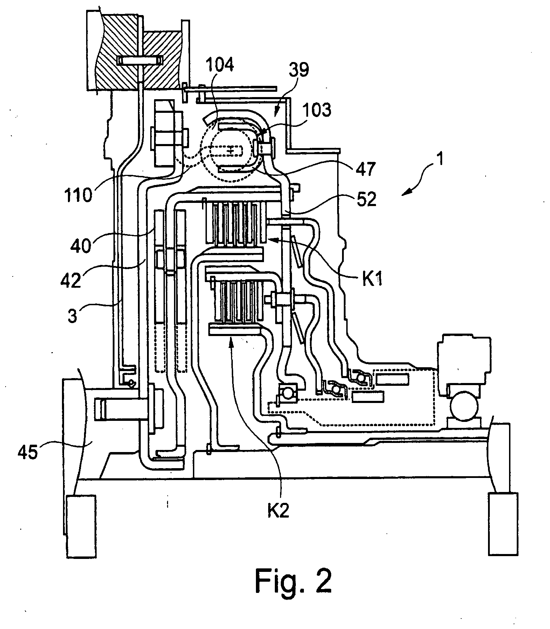

Fig. 2 zeigt eine zweite Ausführungsform, die im Wesentlichen der Figur 1 entspricht, wobei jedoch die Platte 42 einen Flansch zur Betätigung der Federelemente 104 aufweist und der Zugtopf 52 taschenförmige Bereiche zur Aufnahme der Federelemente 104 aufweist.

### Bezugszeichenliste

- 1: Kupplung

- 3: Kupplungsdeckel
- 4: Nassraum
- 5: Trockenraum
- 6: O-Ring
- 7: Gehäuse
- 8: Radialwellendichtring

- 10: Lamellenträger
- 11: Lamelle
- 12: Lamelle
- 13: Lamellenträger
- 14: Nabe
- 15: Getriebeeingangswelle

- 18: Lamellenträger
- 19: Lamellenträger
- 20: Getriebeeingangswelle

- 27: Betätigungseinrichtung
- 28: Gehäuse
- 29: Lagerballus

- 31: Kolben
- 32: Kolben

- 33: Betätigungslager
- 34: Betätigungslager
- 35A: Drucktopf
- 35B: Drucktopf
- 36A: Feder
- 36B: Feder
- 38: Stützlager
- 39: ZMS
- 40: Fliehkraftpendel

- 42: Platte

- 44: Gewinde
- 45: Kurbelwelle

- 47: ZMS-Ausgangsflansch

- 52: Zugtopf

- 59: Schraubverbindung

- K1: Lamellenkupplungen
- K2: Lamellenkupplungen

- 101: Mittensymmetrieachse
- 102: Starterzahnkranz
- 103: taschenförmiger Bereich
- 104: Federelemente
- 105: Stützlager
- 106: Lamellen
- 107: Lamellen
- 108: Nabenbereich
- 109: Gleitlager
- 110: ZMS-Eingangsflansch
- 111: Motorgehäuse
- 112: Positionierstifte
- 113: Anlagefläche
- 114: Anlagefläche
- 115: Öffnung
- 116: Öffnung

## Patentansprüche

1. Mehrfachkupplungsvorrichtung (1) für einen Antriebsstrang mit einer Antriebseinheit und einem nachfolgend angeordneten Getriebe, die mit einer Antriebswelle (45) der Antriebseinheit verbunden und in einer nicht mit der Antriebswelle der Antriebseinheit mitrotierenden Kupplungsglocke (3) aufgenommen ist, mit zwei Lamellenkupplungen (K1, K2), die jeweils einen eingangsseitigen (10, 18) und einen ausgangsseitigen Lamellenträger (13, 19) und sich in axialer Richtung abwechselnde Lamellen aufweisen, und mit einer Betätigungseinrichtung (27) für die Lamellenkupplungen, und der eingangsseitige Lamellenträger (10) der radial äußeren Kupplung an der Antriebswelle (45) über eine Verbindungsplatte auf der Antriebswelle (45) abgestützt ist und **dadurch gekennzeichnet, dass** ein Fliehkraftpendel (40) mit dem eingangsseitigen Lamellenträger (10) verbunden ist, wobei das Fliehkraftpendel (40) an der Verbindungsplatte befestigt ist.

2. Mehrfachkupplungsvorrichtung (1) nach Anspruch 1, **dadurch gekennzeichnet, dass** das Fliehkraftpendel (40) zwischen einem Lamellenpaket einer Lamellenkupplung (K1, K2) und der Antriebswelle (45) angeordnet ist.

3. Mehrfachkupplungsvorrichtung (1) nach einem der Ansprüche 1 bis 2, **dadurch gekennzeichnet, dass** ein Zweimassenschwungrad (39) in der Kupplungsglocke (4) angeordnet ist, dass das Zweimassenschwungrad (39) eine Platte aufweist, die fest mit der Antriebswelle verbunden ist, dass das Zweimassenschwungrad (39) ein Dämpfungselement (104) und einen Zugtopf (52) aufweist, dass die Platte über das Dämpfungselement (104) mit dem Zugtopf (52) in Wirkverbindung steht, dass der Zugtopf (52) auf der Betätigungseinrichtung (27) abgestützt ist, dass der Zugtopf (52) in axialer Richtung zwischen den Lamellenkupplungen (K1, K2) und der Betätigungseinrichtung (27) angeordnet ist, und dass die Betätigungseinrichtung (27) über Drucktöpfe (35A, 35B) durch Öffnungen des Zugtopfes (52) greift, um die Lamellenkupplungen (K1, K2) zu betätigen.

4. Mehrfachkupplungsvorrichtung (1) nach Anspruch 3, **dadurch gekennzeichnet, dass** eingangsseitige Lamellenträger der zwei Lamellenkupplungen (K1, K2) mit dem Zugtopf (52) verbunden sind.

5. Mehrfachkupplungsvorrichtung (1) nach Anspruch 3 oder 4, **dadurch gekennzeichnet, dass** Federn (36A, 36B) zwischen den Drucktöpfen (35A, 35B) und dem Zugtopf (52) angeordnet sind, die die Drucktöpfe (25A, 35B) in eine Ausgangslage vorspannen.

6. Mehrfachkupplungsvorrichtung (1) nach einem der Ansprüche 3 bis 5, **dadurch gekennzeichnet, dass** der Zugtopf (52) und ein Ausgangsflansch des Zweimassenschwungrades (39) einteilig ausgebildet sind.

7. Mehrfachkupplungsvorrichtung (1) nach einem der Ansprüche 1 bis 6, **dadurch gekennzeichnet, dass** ein Zweimassenschwungrad (39) in der Kupplungsglocke (4) angeordnet ist, und dass das Zweimassenschwungrad (39) mit der Antriebswelle über eine Schraubverbindung (45) befestigt ist.

## Claims

1. A multiple clutch device (1) for a drive train having a drive unit and a gearbox arranged downstream thereof, which is connected to a drive shaft (45) of the drive unit and accommodated in a clutch bell housing (3) which does not rotate with the drive shaft of the drive unit, having two multiple-disc clutches (K1, K2) that each have an input-side (10, 18) and an output-side multiple disc carrier (13, 19) and alternating discs in the axial direction, and having an actuating device (27) for the multiple-disc clutches, and the input-side multiple disc carrier (10) of the radially outer clutch is supported on the drive shaft (45) via a connecting plate on the drive shaft (45) and **characterised in that** a centrifugal pendulum (40) is connected to the input-side multiple disc carrier (10), wherein the centrifugal pendulum (40) is attached to the connecting plate.

2. The multiple clutch device (1) according to claim 1, **characterised in that** the centrifugal pendulum (40) is arranged between a disc stack of a multiple-disc clutch (K1, K2) and the drive shaft (45).

3. The multiple clutch device (1) according to any one of claims 1 to 2, **characterised in that** a dual-mass flywheel (39) is arranged in the clutch bell housing (4), **in that** the dual-mass flywheel (39) has a plate that is securely connected to the drive shaft, **in that** the dual-mass flywheel (39) has a damping element (104) and a tension pot (52), **in that** the plate is operatively connected to the tension pot (52) via the damping element (104), **in that** the tension pot (52) is supported on the actuating device (27), **in that** the tension pot (52) is arranged, in the axial direction, between the multiple-disc clutches (K1, K2) and the actuating device (27), and **in that** the actuating device (27) reaches through openings in the tension pot (52) via pressure pots (35A, 35B) in order to actuate the multiple-disc clutches (K1, K2).

4. The multiple clutch device (1) according to claim 3, **characterised in that** input side multiple disc carriers of the two multiple-disc clutches (K1, K2) are connected to the tension pot (52).

5. The multiple clutch device (1) according to claim 3 or 4, **characterised in that** springs (36A, 36B) are arranged between the pressure pots (35A, 35B) and the tension pot (52), which bias the pressure pots (25A, 35B) in an initial position.

6. The multiple clutch device (1) according to any one of claims 3 to 5, **characterised in that** the tension pot (52) and an output flange of the dual-mass flywheel (39) are formed as one piece.

7. The multiple clutch device (1) according to any one of claims 1 to 6, **characterised in that** a dual-mass flywheel (39) is arranged in the clutch bell housing (4), and **in that** the dual-mass flywheel (39) is attached to the drive shaft via a screw connection (45).

## Revendications

1. Dispositif d'embrayage multiple (1) pour une chaîne cinématique avec une unité d'entraînement et une boîte de vitesses disposée en aval, qui est relié à un arbre d'entraînement (45) de l'unité d'entraînement et est logé dans une cloche d'embrayage (3) ne tournant pas avec l'arbre d'entraînement de l'unité d'entraînement, avec deux embrayages à disques (K1, K2), qui présentent chacun un support de disques côté entrée (10, 18) et un support de disques côté sortie (13, 19) et des disques alternant dans la direction axiale et avec un dispositif d'actionnement (27) pour les embrayages à disques et le support de disques (10) côté entrée de l'embrayage radialement extérieur est supporté sur l'arbre d'entraînement (45) par l'intermédiaire d'une plaque de liaison sur l'arbre d'entraînement (45) et **caractérisé en ce qu'**un pendule centrifuge (40) est relié au support de disques (10) côté entrée, le pendule centrifuge (40) étant fixé sur la plaque de liaison.

2. Dispositif d'embrayage multiple (1) selon la revendication 1, **caractérisé en ce que** le pendule centrifuge (40) est disposé entre un paquet de disques d'un embrayage à disques (K1, K2) et l'arbre d'entraînement (45).

3. Dispositif d'embrayage multiple (1) selon l'une quelconque des revendications 1 à 2, **caractérisé en ce qu'**un volant bimasse (39) est disposé dans la cloche d'embrayage (4), **en ce que** le volant bimasse (39) présente une plaque qui est solidaire de l'arbre d'entraînement, **en ce que** le volant bimasse (39) présente un élément d'amortissement (104) et un pot de traction (52), **en ce que** la plaque est en liaison active avec le pot de traction (52) par l'intermédiaire de l'élément d'amortissement (104), **en ce que** le pot de traction (52) s'appuie sur le dispositif d'actionnement (27), **en ce que** le pot de traction (52) est disposé dans la direction axiale entre les embrayages à disques (K1, K2) et le dispositif d'actionnement (27) et **en ce que** le dispositif d'actionnement (27) vient en prise par l'intermédiaire de pots de pression (35A, 35B) à travers des ouvertures du pot de traction (52) pour actionner les embrayages à disques (K1, K2).

4. Dispositif d'embrayage multiple (1) selon la revendication 3, **caractérisé en ce que** des supports de disques côté entrée des deux embrayages à disques (K1, K2) sont reliés au pot de traction (52).

5. Dispositif d'embrayage multiple (1) selon la revendication 3 ou 4, **caractérisé en ce que** des ressorts (36A, 36B) sont disposés entre les pots de pression (35A, 35B) et le pot de traction (52), qui précontraignent les pots de pression (25A, 35B) dans une position initiale.

6. Dispositif d'embrayage multiple (1) selon l'une quelconque des revendications 3 à 5, **caractérisé en ce que** le pot de traction (52) et une bride de sortie du volant bimasse (39) sont formés d'une seule pièce.

7. Dispositif d'embrayage multiple (1) selon l'une quelconque des revendications 1 à 6, **caractérisé en ce qu'**un volant bimasse (39) est disposé dans la cloche d'embrayage (4) et **en ce que** le volant bimasse (39) est fixé à l'arbre d'entraînement par une liaison vissée (45).
